# EUROPÄISCHE PATENTANMELDUNG

(11) **EP 1 468 780 A1**
(43) Veröffentlichungstag der Anmeldung: **20.10.2004**
(21) Anmeldenummer: 04405204.1
(22) Anmeldetag: 02.04.2004
(51) Int. Cl.: B23Q 1/58, F16C 29/06

(54) **Linearmodul-Baugruppe**

(30) Priorität: 09.04.2003 CH 644032003
(71) Anmelder: Schneeberger Holding AG, 4914 Roggwil (CH)
(72) Erfinder: Schneeberger, Hans-Martin, 4900 Langenthal (CH); Mischler, Ernst, 4914 Roggwil (CH); Egger, Hans, 5643 Sins (CH)
(74) Vertreter: EGLI-EUROPEAN PATENT ATTORNEYS

(57) **Zusammenfassung**

Um bei einer Linearbewegungsführung zum Einbau beispielsweise in eine Maschine, Handhabungsvorrichtung oder sonstige technische Anlage mit einer Führungsschiene (3), die mit Tragflächen zum Kontakt mit Wälzkörpern versehen ist, einem Wälzkörperumlaufsystem (17) mit einem Wagen (1), der mittels den Wälzkörpern des Wälzkörperumlaufsystems (17) auf der Führungsschiene (3) gelagert und relativ zur Führungsschiene (3) entlang einer Längsbewegungsachse bewegbar ist und einem Antrieb (5), der zur Erzeugung von Relativbewegungen des Wagens (1) gegenüber der Führungsschiene (3) mit dem Wagen (1) über ein Übertragungsmittel wirkverbunden ist, einer Trägereinrichtung (4), an der die Führungsschiene (3) befestigt ist und zumindest einer Anschlagfläche (12, 14), die zur Anlage an eine Gegenfläche der Strukturvorrichtung und zur präzisen Ausrichtung der Linearmodulbaugruppe vorgesehen ist, den Fertigungsaufwand zu reduzieren, wird vorgeschlagen, dass die zumindest eine Anschlagfläche (12, 14) Bestandteil der Führungsschiene (3) ist und die zumindest eine Anschlagfläche (12, 14) der Linearmodul-Baugruppe von aussen zugänglich ist.

## Beschreibung

Die Erfindung betrifft eine Linearmodul-Baugruppe zum Einbau in eine Strukturvorrichtung, wie beispielsweise eine Maschine, Handhabungsvorrichtung oder sonstige technische Anlage. Die Linearmodul-Baugruppe der erfindungsgemässen Gattung umfasst eine Führungsschiene, die mit Tragflächen zum Kontakt mit Wälzkörpern versehen ist, ein Wälzkörperumlaufsystem mit einem Wagen, der mittels den Wälzkörpern des Wälzkörperumlaufsystems auf der Führungsschiene gelagert und relativ zur Führungsschiene entlang einer Längsbewegungsachse bewegbar ist und einem Antrieb, der zur Erzeugung von Relativbewegungen des Wagens gegenüber der Führungsschiene mit dem Wagen über ein Übertragungsmittel wirkverbunden ist. Weiterhin weist die Linearmodul-Baugruppe der erfindungsgemässen Gattung eine Trägereinrichtung auf, an der die Führungsschiene befestigt ist sowie zumindest eine Anschlagfläche, die zur Anlage an eine Gegenfläche der Strukturvorrichtung und zur präzisen Ausrichtung der Linearmodulbaugruppe vorgesehen ist.

Die an sich seit langem bekannten Linearführungen weisen eine Schiene auf, an der ein Schlitten bzw. Wagen in Richtung einer Längserstreckung der Schiene verfahrbar ist. Die Schiene ist hierzu in der Regel profiliert und mit Tragflächen versehen, die parallel zur Längserstreckung der Schiene verlaufen. In einem Tragbereich sind zwischen dem Wagen und der Schiene Wälzkörper vorhanden, mit denen einerseits der Wagen gegenüber der Schiene verfahrbar und andererseits mechanische Belastungen übertragbar sind. Häufig sind die Wälzkörper in einem oder mehreren in sich geschlossenen Wälzkörperumläufen des Wagens angeordnet.

Zur Ausführung der erwähnten Relativbewegungen ist ein Antrieb erforderlich. Bei einem Typ von Linearbewegungsführungen wird der Antrieb erst beim Maschinen- bzw. Anlagenhersteller mit dem Wagen wirkverbunden. Dem Anbieter der Linearbewegungsführung ist in der Regel nicht bekannt, welcher Antrieb vom Maschinenhersteller benutzt wird, an welcher Stelle dieser angeordnet wird und welche konkrete Lösung für eine Wirkverbindung zwischen dem Wagen und der Schiene vorgesehen ist.

Bei dieser Lösung wird die Schiene direkt in die Maschine eingebaut. Eine hochpräzise bearbeitete Grundfläche bzw. Unterseite und eine ebensolche Seitenfläche dienen zum Anschlag an eine Gegenfläche bzw. einen Absatz der Maschine oder Anlage, um hierdurch eine möglichst genaue Ausrichtung der Schiene gegenüber anderen Komponenten der Maschine, beispielsweise dem Antrieb oder Bearbeitungswerkzeugen, vornehmen zu können. Der Antrieb wird dann unabhängig von der Schiene und dessen mindestens einem Wagen in die Maschine integriert. Ebenso wird die Wirkverbindung zwischen dem Antrieb und dem Wagen erst in der Maschine und separat vom Einbau der beiden Komponenten vorgenommen.

Um bei Maschinenherstellern Logistik-, Konstruktions- und Montageaufwand zu reduzieren sind die eingangs genannten Linearmodule bereits bekannt geworden. Diese zeichnen sich dadurch aus, dass sie als vormontierte Baugruppen an Maschinenhersteller geliefert werden. Die Baugruppe enthält somit einen Antrieb, eine Linearbewegungsführung mit Schiene und zumindest einen Wagen, eine Wirkverbindung zwischen dem Antrieb und dem Wagen sowie eine Trägereinrichtung, auf der die vorgenannten Komponenten der Baugruppe angeordnet sind. Derartige Module können in einem Stück in Maschinen oder Anlagen eingebaut werden.

Die Trägereinrichtung dient vor allem zur Aufnahme der einzelnen Komponenten des jeweiligen Moduls und zur Aufnahme der durch die Antriebsbewegung entstehenden Kräfte und Momente. Um eine genaue und exakte Ausrichtung des Moduls zu erreichen, ist zumindest eine Anschlagfläche erforderlich. Diese Anschlagfläche dient als Referenzfläche zur Ausrichtung des Moduls in der Maschine. Fertigungsmasse und ihre Toleranzen von anderen Maschinenkomponenten, die in Wechselwirkung mit dem Modul stehen, sind üblicherweise auf diese Anschlagfläche bezogen. Es ist daher erforderlich, die mindestens eine Anschlagfläche des Moduls sehr genau zu bearbeiten.

Auch die Schiene ist mit zumindest einer Anschlagfläche versehen, da auch die genaue Ausrichtung der Schiene auf die Präzision des Moduls massgeblichen Einfluss hat. Sowohl die Anschlagfläche der Schiene als auch die hierfür in der Trägereinrichtung vorgesehene Gegenfläche müssen sehr präzise bearbeitet sein, um eine hohe Fertigungsgenauigkeit zu gewähren. Zudem benötigen vorbekannte Linearmodule ein hohes Einbauvolumen.

Aus der DE-A-100 08 700 ist eine gattungsfremde Linearführungsvorrichtung mit einer Rollenführung bekannt, bei der - dort sinnvoll - Führungsstangen zur Ausrichtung verwendet werden. Diese Lösung ist aber bei einer Linearführungsvorrichtung mit einem Wälzkörperumlauf nur mit einem zusätzlichen Aufwand ansonsten überflüssiger Führungsstangen realisierbar.

Bei den ebenfalls gattungsfremden, aus der US-A-6 662 934 bzw. aus der DE-A-197 49 668 bekannten Linearbewegungsführung, die als Gleitführung ausgebildet sind, sind Anschlagflächen grundsätzlich bekannt, ohne dass sie hier unmittelbar als Vorbild dienen könnten. Bei dem letztgenannten Dokument weist die Ausführung als gleitgelagerte Linearführung mit einem Deckelaufbau noch weitere Unterschiede auf, die zu völlig unterschiedlichen Anforderungen führen. Eine gattungsfremde Linearbewegungsführung ist auch aus der EP-A-0 798 478 bekannt, die ebenfalls als Gleitführung ausgebildet ist.

Gattungsähnlich dagegen ist die Linearbewegungsführung, wie sie z.B. aus der EP-A-1 045 158 bekannt ist. Diese Linearbewegungsführung entspricht somit am ehesten dem Stand der Technik gemäss dem Oberbegriff nach Anspruch 1. Allerdings handelt es sich bei der Montagefläche der EP-A-1 045 158 um die eines Vorrichtungsgehäuses, in dem der Antriebsteil und andere Elemente der Linearbewegungsführung untergebracht sind. Die von der Erfindung verlangten Vorteile einer einfachen Bauausführung können mit der Linearbewegungsführung der EP-A-1 045 158 somit nicht erzielt werden.

Der Erfindung liegt deshalb die Aufgabe zugrunde, eine Möglichkeit zu schaffen, den Fertigungsaufwand für gattungsgemässe Linearmodul-Baugruppen zu reduzieren.

Die Aufgabe wird bei einer Linearmodul-Baugruppe mit einem Wälzkörperumlaufsystem und einer Führungsschiene erfindungsgemäss dadurch gelöst, dass die Schiene zwar von der Trägereinrichtung aufgenommen ist, die Anschlagfläche des Linearmoduls jedoch an der Schiene ausgebildet ist.

Es ist somit erfindungsgemäss vorgesehen, die an der Schiene ohnehin erforderliche Anschlagfläche als Anschlagfläche des Linearmoduls zu nutzen. Zumindest eine der bisher bei den gattungsgemässen Linearführungssystemen an der Trägereinrichtung stets erforderlichen Anschlagflächen kann als hochpräzise zu bearbeitende Fläche somit entfallen. Die zumindest eine Anschlagfläche der Schiene sollte deshalb bei der Linearmodul-Baugruppe von aussen zugänglich sein. Besondere Vorteile ergeben sich, wenn ein Abschnitt der parallel zur Längsbewegungsachse verlaufenden Seitenflächen der Schiene als Anschlagfläche des Moduls vorgesehen ist.

Es ist somit erfindungsgemäss erforderlich und vorgesehen, eine der Flächen der Schiene als Anschlagfläche für ein (Maschinen-)Strukturteil zugänglich zu machen. Da andererseits aber die Trägereinrichtung im Bereich der Anschlagfläche sogar hinderlich ist, ermöglicht die Erfindung Linearmodule kompakter zu gestalten, als dies bisher vorgesehen war.

Aufgrund der erfindungsgemässen Massnahme kann trotz einer Reduzierung des konstruktiven und fertigungstechnischen Aufwands gegenüber herkömmlichen Linearmodulen eine Steigerung der Genauigkeit von Linearmodul-Baugruppen erreicht werden. Da zumindest eine der zusätzlichen Anschlagflächen der Trägereinrichtung entfällt, können auch mit dieser Anschlagfläche verbundene Bearbeitungs- und Ausrichtfehler vermieden werden.

In einer bevorzugten Ausführungsform kann anstelle der Trägereinrichtung eine Unterseite der Führungsschiene als Montagefläche der Linearmodul-Baugruppe vorgesehen sein. Hierdurch kann eine weitere Reduktion der Baugrösse von erfindungsgemässen Linearmodulen erreicht werden. In diesem Zusammenhang kann als Montagefläche jene Fläche verstanden werden, über die die Gewichtskraft des Linearmoduls in die Maschine bzw. Anlage abgetragen wird.

Es kann vorgesehen sein, die Trägereinrichtung im Wesentlichen lediglich noch zur Versteifung des Linearmoduls zu benutzen. In diesem Zusammenhang können sich Vorteile daraus ergeben, dass die Trägereinrichtung an zumindest einer seitlichen Fläche an der Schiene befestigt ist. Zur Befestigung kann beispielsweise eine Schweissverbindung vorgesehen sein. In einer bestimmten konstruktiven Ausgestaltung kann die Trägereinrichtung im Bereich der Schiene abgewinkelte Profile aufweisen, die durch Ziehen oder Biegung ihre Form erhalten haben. Bei erfindungsgemässen Linearmodulen lassen sich bereits mit Blechprofilen ausreichende Steifigkeiten erreichen.

Weitere bevorzugte Ausgestaltungen der Erfindung ergeben sich aus den abhängigen Ansprüchen.

Die Erfindung wird anhand der in den Figuren rein schematisch dargestellten Ausführungsbeispielen näher erläutert; es zeigen:
- Fig. 1: eine Draufsicht auf eine erste erfindungsgemässe Ausführungsform einer Linearmodul-Baugruppe;
- Fig. 2: eine Querschnittsdarstellung der Linearmodul-Baugruppe von Fig. 1;
- Fig. 3: eine weitere erfindungsgemässe Ausführungsform in einer Querschnittsdarstellung;
- Fig. 4: eine weitere erfindungsgemässe Ausführungsform in einer Querschnittsdarstellung;
- Fig. 5: eine Schnittdarstellung gemäss der Linie V-V in Fig. 1.

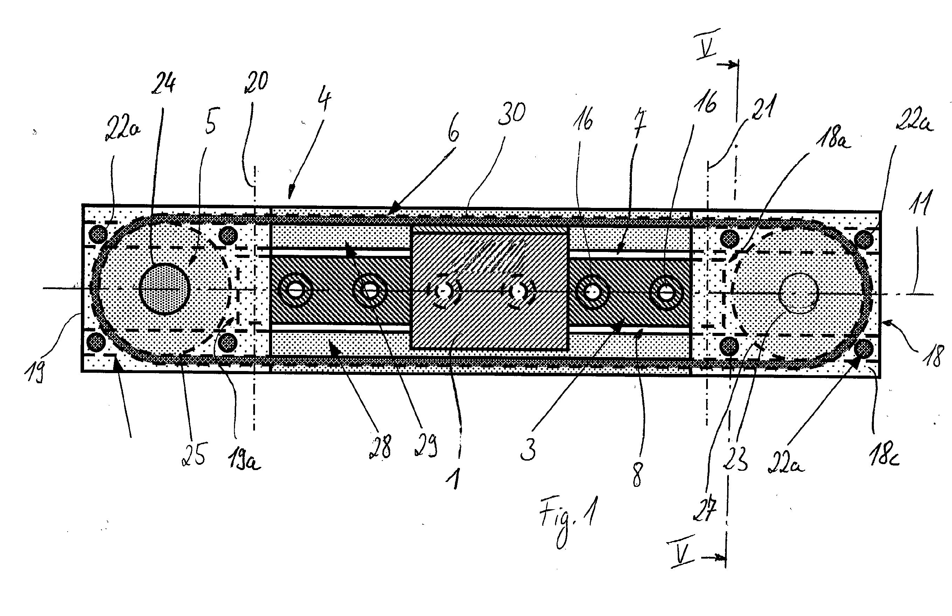

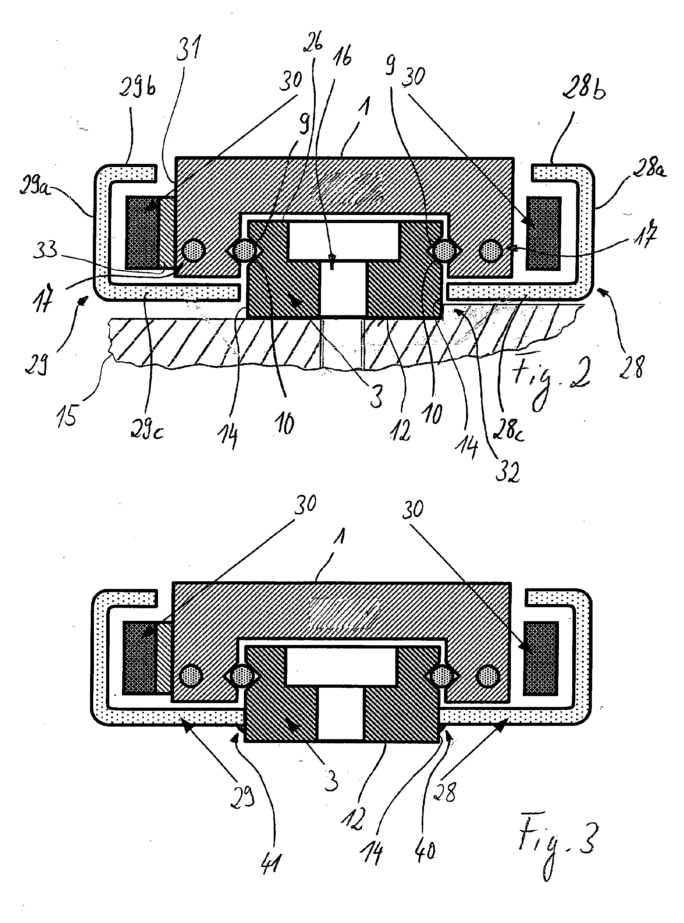

In Fig. 1 und 2 ist eine Linearmodul-Baugruppe in einem Zustand gezeigt, in dem die Baugruppe von einem Hersteller von Linearbewegungsführungen zur Auslieferung gelangt. Die Linearmodul-Baugruppe weist einen Wagen 1 auf, der über Wälzkörper 2 entlang einer profilierten, geradlinigen Führungsschiene 3 bewegbar ist. Die Führungsschiene 3 ist in einer Trägereinrichtung 4 befestigt, die auch einen nur teilweise dargestellten Antrieb 5 aufnimmt. Eine als Hülltrieb 6 ausgebildete Wirkverbindung zwischen dem Wagen 1 und dem Antrieb 5 überträgt eine Antriebsbewegung auf den Wagen 1.

Die Führungsschiene 3 weist im oberen Bereich ihrer beiden Seitenflächen 7, 8 jeweils zwei zueinander geneigte Tragflächen 9, 10 auf. Die Seiten- und damit auch die Tragflächen 9, 10 erstrecken sich parallel zu einer Längsbewegungsachse 11, entlang der der Wagen 1 bewegbar ist. Unterhalb der Tragflächen 9, 10 ist ein sich ebenfalls parallel zur Längsbewegungsachse verlaufender Abschnitt der Seitenflächen 7, 8 jeweils als seitliche Anschlagfläche 14 ausgebildet. Die seitlichen Anschlagflächen 14 sind sehr präzise bearbeitet, um möglichst geringe Form- und Lagetoleranzen zu erzielen. Wie es auch in dem gezeigten Ausführungsbeispiel der Fall ist, ist die Anschlagfläche 14 vorzugsweise ein einstückiger Bestandteil der Schiene 3, wobei die Schiene vorzugsweise insgesamt einstückig ausgebildet sein kann. Die Anschlagfläche 14 der Linearmodul-Baugruppe ist von aussen zugänglich.

Bei dem Ausführungsbeispiel von Fig. 1 und Fig. 2 ist auch eine Unterseite der Schiene als Anschlagfläche vorgesehen. Diese untere Anschlagfläche 12 dient ebenfalls zur positionsgenauen Ausrichtung der Linearmodul-Baugruppe in einer Strukturvorrichtung und ist deshalb zur Einhaltung geringer Toleranzen präzise bearbeitet.

Zur Befestigung der Führungsschiene 3 an einem Strukturteil 15 einer Strukturvorrichtung, wie beispielsweise einer Werkzeugmaschine, Produktionsanlage oder Handhabungseinrichtung, weist die Schiene 3 mehrere Durchgangsbohrungen 16 auf. Diese sind in an sich vorbekannter Weise zur Aufnahme von jeweils einer Schraube (nicht dargestellt) ausgebildet.

Auf der Führungsschiene 3 ist der im Querschnitt etwa U-förmige Wagen 1 angeordnet. In seinen beiden Schenkeln ist jeweils ein Wälzkörperumlauf 17 vorgesehen. In anderen Ausführungsformen der Erfindung können in jedem Schenkel auch zwei oder mehr Wälzkörperumläufe vorgesehen sein. In den Figuren nicht dargestellte Umlenkkanäle jedes Wälzkörperumlaufs 17 verbinden einen Rücklaufkanal 17a mit einem Tragbereich 17b und ermöglichen hierdurch eine Zirkulation der Wälzkörper 2 im jeweiligen Wälzkörperumlauf.

Im Tragbereich 17b sind die Wälzkörper sowohl mit dem Wagen als auch mit den Tragflächen 9 der Schiene 3 in Kontakt und ermöglichen somit eine Lastabtragung vom Wagen 1 auf die Schiene 3 und vice versa.

Die Trägereinrichtung 4 der Linearmodul-Baugruppe weist im Bereich der Stirnseiten der Schiene 3 jeweils einen im Querschnitt rechteckförmigen metallischen Aufnahmeteil 18, 19 auf. Letztere sind mit einer Nut 18a, 19a versehen, in der sich jeweils ein stirnseitiger Abschnitt der Schiene 3 befindet. Die Schiene 3 ist im Bereich ihrer Seitenflächen durch Schraubverbindungen 20, 21 an jedem der Aufnahmeteile 18, 19 befestigt.

Jede der Schraubverbindungen 20, 21 kann hierzu zwei Madenschrauben aufweisen, von denen jeweils eine Madenschraube auf jeder Seitenfläche der Schiene angeordnet ist. Die Schrauben der Schraubverbindung 21 können an der Schiene "schwimmend" angebracht sein. Hierunter ist zu verstehen, dass die Schiene 3 gegenüber dem Aufnahmeteil 19 in Richtung der Längsbewegungsachse 11 beweglich ist, um beispielsweise temperaturbedingte Grössenveränderungen oder auch Fertigungsungenauigkeiten ausgleichen zu können. Die schwimmende Lagerung kann beispielsweise durch Verwendung von verformbaren Kunststoffschrauben erreicht werden. Es ist hierbei bevorzugt, dass nur gegenüber jenem Aufnahmeteil 19 eine schwimmende Lagerung vorgesehen ist, an dem kein Antrieb angeordnet ist.

Jeder der Aufnahmeteile 18, 19 dient u.a. zur Lagerung des Antriebs 5 bzw. der als Hülltrieb 6 ausgebildeten Wirkverbindung des Antriebs 5 mit dem Wagen 1. So ist gemäss Fig. 1 an dem ersten Aufnahmeteil 18 ein elektrischer Motor angeordnet, auf dessen Antriebswelle 24 ein Zahnrad 25 befestigt ist. Die Rotationsachse der Antriebswelle 24 verläuft senkrecht zur Oberseite 26 (Fig. 2) der Schiene 3 und damit auch zur Zeichenebene von Fig. 1.

Im zweiten Aufnahmeteil 19 ist eine passiv um eine Rotationsachse drehbare Welle 23 (Fig. 1) gelagert, auf der ebenfalls ein Zahnrad 27 angeordnet ist. Die Antriebswelle 24 sowie die Welle 23 verlaufen parallel zueinander.

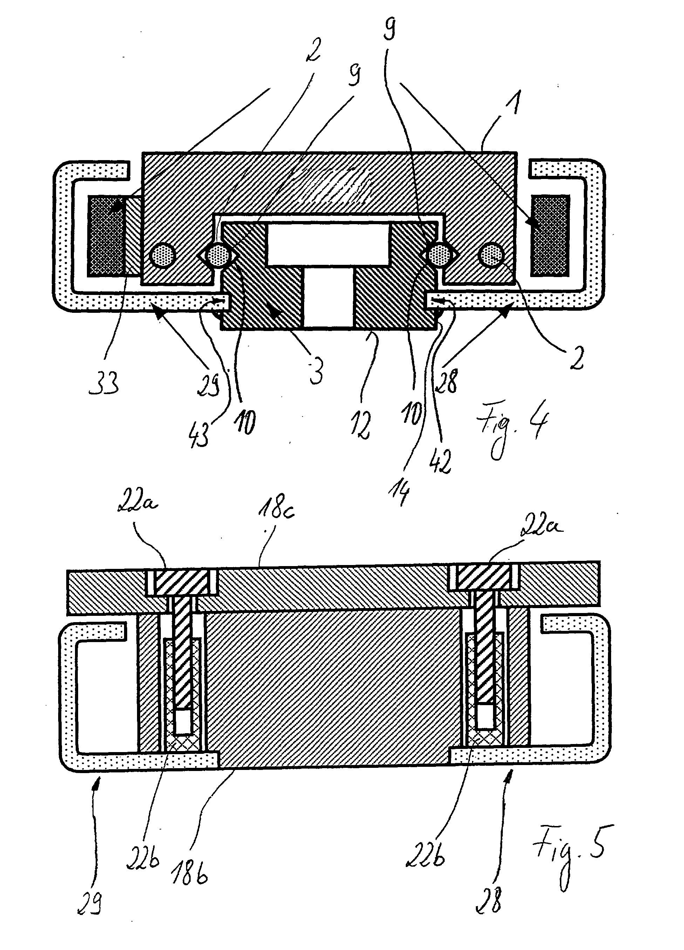

Zwei U-förmige Trägerprofile 28, 29 sind ebenfalls Bestandteil der Trägereinrichtung. Die gebogenen oder gezogenen Trägerprofile 28, 29 können eine Dicke von 0,3 mm bis 3 mm, vorzugsweise von 0,5 mm bis 2 mm aufweisen. Jedes Profil 28, 29 ist jeweils mittels vier Schrauben 22a an den beiden Aufnahmeteilen 18, 19 befestigt. Wie aus Fig. 5 hervorgeht, sind hierzu auf den sich entlang der gesamten Linearmodul-Baugruppe erstreckenden Trägerprofile 28, 29 Gewindehülsen 22b aufgeschweisst. Auf den Gewindehülsen 22b ist dann ein näherungsweise quaderförmiger unterer Träger 18b des Aufnahmeteils 18 aufgeschoben. Ein Deckel 18c ist mittels den in die Gewindehülsen 22b eingedrehten Schrauben 22a am Träger 18b und damit auch an den Trägerprofilen 28, 29 befestigt.

Hierbei ist von den beiden Trägerprofilen 28, 29 jeweils eines auf einer Seite der Führungsschiene 3 angeordnet. Wie insbesondere in Fig. 2 zu erkennen ist, verläuft ein Verbindungsschenkel 28a, 29a von jedem Trägerprofil etwa parallel zur seitlichen Anschlagfläche 14. Ein oberer kurzer freier Schenkel 28b, 29b ist mit seinem freien Ende mit geringem Abstand unmittelbar gegenüber Seitenflächen des Wagens 1 angeordnet. Ein unterer langer Schenkel 28c des jeweiligen Profils befindet sich mit seinem freien Ende mit Abstand unmittelbar gegenüber der jeweiligen seitlichen Anschlagfläche 14.

Die Wirkverbindung des dargestellten Ausführungsbeispiels weist einen in sich ringförmig geschlossenen Zahnriemen 30 auf, der um die beiden Zahnräder 25, 27 geführt ist. Der Zahnriemen 30 ist zudem über ein am Wagen befestigtes verzahntes Zwischenstück 33 an einer Seitenfläche 31 des Wagens 1 befestigt. Der Zahnriemen greift hierbei in die Verzahnung des Zwischenstücks 33 ein und ist dadurch in der Lage, den Wagen zu bewegen. Wie insbesondere aus Fig. 2 ersichtlich ist, verläuft der Zahnriemen im Bereich der Schiene 3 jeweils zwischen den beiden Schenkeln 28a, 29a der Profile 28, 29. Eine rotative Antriebsbewegung des Elektromotors wird somit über den Hülltrieb in eine lineare Verfahrbewegung des Wagens 1 umgesetzt bzw. transformiert. Hierbei kann ein Kraftfluss von einem der Aufnahmeteile 18, 19 in den jeweils anderen Aufnahmeteil 18, 19 über die beiden Profile 28, 29 fliessen.

Um die Linearmodul-Baugruppe zu befestigen wird sie zur Auflage mit der unteren Anschlagfläche 12 der Führungsschiene beispielsweise auf ein (Maschinen-)Strukturteil gesetzt und mit einer der beiden seitlichen Anschlagflächen 14 zur flächigen Anlage gegen einen Absatz 32 des Strukturteils gedrückt. Ebenso wie die seitliche und die untere Anschlagfläche 12, 14 ist auch die Fläche des Absatzes 32 sehr genau bearbeitet. Mittels Schrauben, die in die Bohrungen 16 der Schiene 3 und in entsprechend dem Lochbild der Schiene 3 vorgesehene Gewindebohrungen des Strukturteils 15 eingedreht werden, kann die Schiene 3 in dieser Position auf dem Strukturteil 15 befestigt werden. Nachdem die Linearmodul-Baugruppe an eine Energieversorgung sowie an eine Steuerung der jeweiligen Maschine angeschlossen ist, kann sie bereits zum Einsatz kommen.

Die in Fig. 3 gezeigte weitere erfindungsgemässe Linearmodul-Baugruppe ist prinzipiell gleich aufgebaut, wie die Linearmodul-Baugruppe aus Fig. 1 und Fig. 2. Es wird deswegen nachfolgend nur auf einen entscheidenden Unterschied eingegangen, der im Wesentlichen in einer Befestigung der Trägerprofile an der Schiene zu sehen ist. An sich gleiche Bauteile sind deshalb auch mit den selben Bezugszeichen benannt. Wie aus Fig. 3 hervorgeht, liegen die Trägerprofile 28, 29 mit den freien Enden ihrer unteren Schenkel 28c, 29c unterhalb der Tragflächen 8, 9 an der Schiene 3 an. Mittels Schweissungen 40, 41 oder Klebverbindungen sind die unteren Schenkel 28c, 29c der Trägerprofile 28, 29 an der Schiene 3 befestigt. Durch eine solche Befestigung kann eine Versteifung der Linearmodul-Baugruppe erreicht werden.

Selbstverständlich sind auch andere Befestigungsformen möglich. In Fig. 4 ist hierfür ein Beispiel gezeigt, bei dem die unteren Schenkel 28c, 29c jeweils in eine Nut 42 eingepresst sind. Zusätzlich kann vorgesehen sein, die Trägerprofile durch Schweiss- bzw. Klebverbindungen 40, 41 an der Schiene 3 zu befestigen. Bei den Ausführungsbeispielen der Fig. 3 und Fig. 4 dienen die Flächenabschnitte unterhalb der Nuten 42, 43 bzw. Schweiss- oder Klebverbindungen 40, 41 als seitliche Anschlagfläche 14.

In weiteren, jedoch nicht näher dargestellten, Ausführungsformen können auch andere Wirkverbindungen bzw. Antriebe vorgesehen sein, wie beispielsweise eine parallel zur Längsbewegungsachse verlaufende rotierbare Spindel, Linearmotoren oder Hydraulikzylinder. Eine auf der Spindel angeordnete Spindelmutter ist hierbei am Wagen befestigt bzw. Bestandteil des Wagens. Eine Rotationsbewegung der Spindel führt zu einer Längsbewegung des Wagens.

### Bezugszeichenliste

- 1: Wagen
- 2: Wälzkörper
- 3: Führungsschiene
- 4: Trägereinrichtung
- 5: Antrieb
- 6: Hülltrieb
- 7: Seitenfläche
- 8: Seitenfläche
- 9: Tragfläche
- 10: Tragfläche
- 11: Längsbewegungsachse
- 12: untere Anschlagfläche
- 14: seitliche Anschlagfläche
- 15: Strukturteil
- 16: Durchgangsbohrung
- 17: Wälzkörperumlauf
- 17a: Rücklaufkanal
- 17b: Tragbereich
- 18: Aufnahmeteil
- 18a: Nut
- 18b: Träger
- 18c: Deckel
- 19: Aufnahmeteil
- 19a: Nut
- 20: Schraubverbindung
- 21: Schraubverbindung
- 22a: Schraube
- 22b: Gewindehülse
- 23: Welle
- 24: Antriebswelle
- 25: Zahnrad
- 26: Oberseite
- 27: Zahnrad
- 28: Trägerprofil
- 28a: Verbindungsschenkel
- 28b: oberer Schenkel
- 28c: unterer Schenkel
- 29: Trägerprofil
- 29a: Verbindungsschenkel
- 29b: oberer Schenkel
- 29c: unterer Schenkel
- 30: Zahnriemen
- 31: Seitenfläche
- 32: Absatz
- 33: Zwischenstück
- 40: Schweissung
- 41: Schweissung
- 42: Nut
- 43: Nut

## Patentansprüche

1. Linearmodul-Baugruppe zum Einbau in eine Strukturvorrichtung, wie beispielsweise eine Maschine, Handhabungsvorrichtung oder sonstige technische Anlage, umfassend
- eine Führungsschiene (3), die mit Tragflächen zum Kontakt mit Wälzkörpern versehen ist,
- ein Wälzkörperumlaufsystem (17) mit
- einem Wagen (1), der mittels den Wälzkörpern des Wälzkörperumlaufsystems (17) auf der Führungsschiene (3) gelagert und relativ zur Führungsschiene (3) entlang einer Längsbewegungsachse bewegbar ist und
- einem Antrieb (5), der zur Erzeugung von Relativbewegungen des Wagens (1) gegenüber der Führungsschiene (3) mit dem Wagen (1) über ein Übertragungsmittel wirkverbunden ist,
- eine Trägereinrichtung (4), an der die Führungsschiene (3) befestigt ist,
- zumindest eine Anschlagfläche (12, 14) , die zur Anlage an eine Gegenfläche der Strukturvorrichtung und zur präzisen Ausrichtung der Linearmodulbaugruppe vorgesehen ist,
**dadurch gekennzeichnet, dass**
die zumindest eine Anschlagfläche (12, 14) Bestandteil der Führungsschiene (3) ist und
die zumindest eine Anschlagfläche (12, 14) der Linearmodul-Baugruppe von aussen zugänglich ist.

2. Linearmodul-Baugruppe nach Anspruch 1, **gekennzeichnet durch** eine erste, untere Anschlagfläche (12), die zumindest einen Teil der Unterseite der Führungsschiene (3) ausbildet und/oder parallel zur Längsbewegungsachse des Wagens ausgerichtet ist sowie von aussen zugänglich ist.

3. Linearmodul-Baugruppe nach Anspruch 2, **dadurch gekennzeichnet, dass** die genannte erste, untere Anschlagfläche (12, 14) der Führungsschiene (3) als Montagefläche der Linearmodul-Baugruppe vorgesehen ist, über die die Gewichtskraft der Linearmodul-Baugruppe in ein Strukturteil abgetragen wird.

4. Linearmodul-Baugruppe nach Anspruch 3, **dadurch gekennzeichnet, dass** die Unterseite der Führungsschiene (3) als Montage- und als Anschlagfläche (12) der Linearmodul-Baugruppe vorgesehen ist.

5. Linearmodul-Baugruppe nach einem der vorstehenden Ansprüche 1 bis 4, **gekennzeichnet durch** eine zweite, seitliche Anschlagfläche (14), die zumindest einen Teil der Seitenfläche der Führungsschiene (3) ausbildet und/oder parallel zur Längsbewegungsachse des Wagens ausgerichtet ist sowie von aussen zugänglich ist.

6. Linearmodul-Baugruppe nach einem der vorhergehenden Ansprüche, **dadurch gekennzeichnet, dass** die Trägereinrichtung (4) an zumindest einer Seitenfläche der Führungsschiene (3) befestigt ist.

7. Linearmodul-Baugruppe nach Anspruch 6, **dadurch gekennzeichnet, dass** die Trägereinrichtung (4) an zumindest einer Stelle der Führungsschiene (3) befestigt ist, die sich zwischen einer Tragfläche (9) und einer Anschlagfläche (14) befindet.

8. Linearmodul-Baugruppe nach Anspruch 6 oder 7, **gekennzeichnet durch** eine Schweiss- und/oder Klebeverbindung (40, 41), mit der die Trägereinrichtung (4, 28, 29) an der Führungsschiene (3) befestigt ist.

9. Linearmodul-Baugruppe nach einem der Ansprüche 6 bis 8, **gekennzeichnet durch** zumindest eine Nut (42, 43) der Führungsschiene (3), in der die Trägereinrichtung (4, 28, 29) angeordnet ist.

10. Linearmodul-Baugruppe nach einem der vorhergehenden Ansprüche, **dadurch gekennzeichnet, dass** zumindest ein Trägerprofil (28, 29) parallel und mit Abstand zur Führungsschiene (3) angeordnet ist.

11. Linearmodul-Baugruppe nach einem der vorhergehenden Ansprüche, **dadurch gekennzeichnet, dass** zumindest eine der Anschlagflächen (12, 14) unlösbar und vorzugsweise einstückig mit der Führungsschiene (3) verbunden ist.

12. Linearmodul-Baugruppe nach einem der vorhergehenden Ansprüche, **gekennzeichnet durch** eine schwimmende Lagerung der Führungsschiene (3) an zumindest einem Bauteil der Trägereinrichtung, **durch** die die Führungsschiene (3) zumindest einen Freiheitsgrad gegenüber dem zumindest einen Bauteil aufweist.

13. Linearmodul-Baugruppe nach einem der vorhergehenden Ansprüche, **dadurch gekennzeichnet, dass** der Antrieb (5) an der Trägereinrichtung (4) befestigt ist.
